# EUROPEAN PATENT APPLICATION

(11) **EP 1 415 691 A1**
(43) Date of publication of application: **06.05.2004**
(21) Application number: 02425665.3
(22) Date of filing: 31.10.2002
(51) Int. Cl.: A63F 13/12

(54) **System for and method of managing games in mobile communications networks**

(71) Applicant: Siemens Mobile Communications S.p.A., 20126 Milano (IT)
(72) Inventor: Bacchi, Alessandro, 20138 Milano (IT); Porcari, Mirco, 29016 Cortemaggiore (IT)

(57) **Abstract**

A system for managing a game based on a challenge between users of a mobile communication network, comprises game governing means arranged to present identical sets of game data on the mobile terminals (3) of all users participating in a challenge and to enable each of said users to operate, by means of his/her terminal (3), on said data until completion of the game, in a manner independent of and asynchronous with respect to the operation by the other user(s) participating in the same challenge. The game governing means may be a server (1), storing the game data to be presented to the users and processing game data resulting from user operation, or a game software stored in the terminals (3) of the users having subscribed to the game service.

## Description

### FIELD Of THE INVENTION

The present invention relates to mobile communications, and more particularly it concerns a system for and a method of managing game application based on a challenge between users of a mobile communications network.

### BACKGROUND OF THE INVENTION

Mobile communications network operators already offer their users a number of entertainment and game applications.

In first kind of game applications, the players interact through the network only with a server managing the application: The users receive game data to be operated on from the server and transmit user-side game data to the server. Based on such user-side data the server takes further actions (e. g. places a bet). Examples are disclosed in EP-B 1 057 147 and EP-A 1 179 952. The impossibility of interacting with other users is a strong limitation.

Game systems providing for interaction among a plurality of users of a mobile communications network are disclosed in EP-A 1 066 868 and EP-A 1 066 867.

The first mentioned document discloses a system in which the players must belong to a same geographical area (e. g. a cell), and requires the use of game terminals distinct from the mobile phones, which moreover must be of a special kind having a double transceiver. Thus, participation to the game compels the players to buy special equipment. The resulting costs render the system scarcely appealing.

EP-A 1 066 867 discloses a game system in which the players have no restriction on their geographical location and do not require a specific game terminal. The games can be played by using conventional mobile phones. In such a system a player intending to challenge other players can access a game master to select the opponents among a list of players that are free to participate in the challenge. Each challenged player can accept or refuse the challenge. Once the group of participants is complete (i.e. all challenged players have accepted or refused), the game can start. Each player plays when its turn occurs.

Also such system has a number of limitations. The challenge can be launched only to users that are free; the game can start only when all challenged participants have communicated their acceptance or refusal to participate; each player can perform a game action only when his/her turn occurs and his/her actions depend on those of the other players. The system is therefore scarcely flexible. Also the format of the game data presented to the players suffers from limitations, in that only text and fixed, very simple images are envisaged.

### SUMMARY OF THE INVENTION

It is an object of the present invention to provide a game system for a mobile communications network, in which games based on a challenge between users can be played by using the conventional mobile terminals of the users and which overcomes the problems of the prior art systems.

This is attained, in a first aspect of the invention, by a system comprising game governing means arranged to present identical sets of game data on the terminals of all users participating in a challenge and to enable each of said users to operate, by means of his/her terminal, on said data until completion of the game, in a manner independent of and asynchronous with respect to the operation by the other user(s) participating in the same challenge.

Preferably, the game governing means are included in a server, storing the game data to be presented to the users and processing game data resulting from user operation, or are a game software stored in the terminals of the users having subscribed to the service.

In a second aspect of the invention, there is provided a method for managing, in a mobile communications network, games based on a challenge between users of the network, which method comprises the steps of: presenting identical sets of game data on the terminals of all users participating in a challenge; and enabling operation on said data by each of said users participating in a challenge, by means of his/her terminal, until completion of the game, in a manner independent of and asynchronous with respect to the operation by the other user(s) participating in the same challenge.

The games can fully exploit the multimedia capabilities that only advanced networks and terminals, in particular the 3rd generation networks and terminals, allow. Indeed, users of 3rd generation systems can use a wide variety of terminals like notebooks, PDA's (Personal Digital Assistants), smart-phones, so that the same content can be shown through different technologies (WEB, WAP, SMS, MMS...) and in different forms (text only, images, audio and video clips...). Thus a high flexibility and a high attractiveness are attained.

It is clear that some of the above mentioned languages and data formats can be supported also by 2nd generation (GSM) terminals, at least those equipped with GPRS and/or WAP facilities. Thus, a certain degree of backward compatibility should be provided, so that also a number of GSM users can access the application, though with obvious limitations.

### BRIEF DESCRIPTION OF THE DRAWINGS

The invention will be better understood from the following description of a preferred embodiment, given by way of non-limiting example, with reference to the accompanying drawings, in which:
- Fig. 1 is a block diagram of the architecture of system according to the invention;
- Fig. 2 is a flow chart of the operation;
- Figs. 3 to 6 are some examples of masks or pages displayed to the players during the challenge;

### DESCRIPTION OF THE PREFERRED EMBODIMENT

The following description considers, by way of example, a quiz-based challenge.

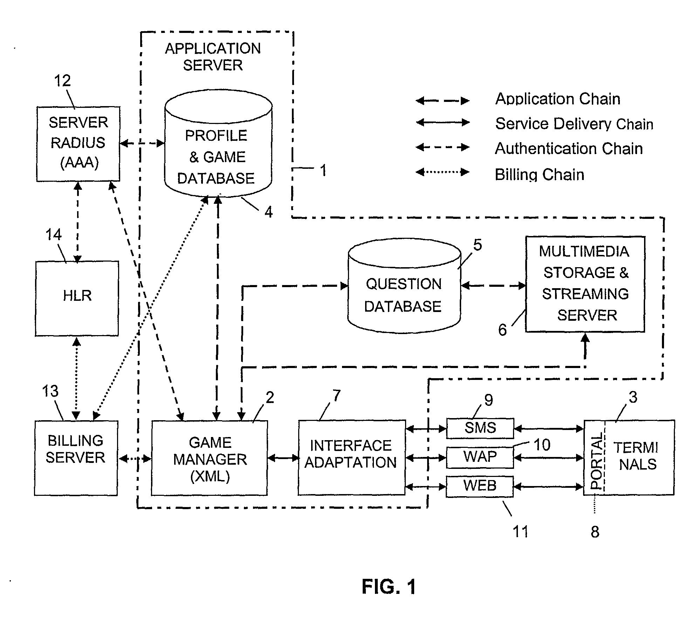

As shown in Fig. 1, an apparatus for managing a quiz-based entertainment, denoted in the whole by reference numeral 1 and enclosed in the dotted-and-dashed line block labelled "Application Server", comprises a game manager 2, which is entrusted with all tasks necessary to generate the quiz sessions.

To this end, game manager 2 is associated with the databases necessary to provide the service and with the means allowing a dialogue with the users (schematised in the whole by block 3, labelled "Terminals"), in a manner depending on the technical features of each user terminal, as it will be disclosed in more detail hereinafter. For the moment, we only mention that users of a 3rd generation system can use, besides cellular phones, other terminals such as laptop computers, palmar computers like PDA's etc.

The databases necessary to provide the service include:
- a Profile and Game Database 4, containing all of the information about the subscribers, in particular a profile composed by an identity, e.g. in the form of a nick name possibly associated with an image or an avatar, the technical capabilities of the subscriber's terminal, the arguments of interest, the level of ability, data relative to the participation to the game (score, ranking, statistical data such a number of challenge, percentage of victories...);
- a Quiz Generator Logical Entity, comprising the Question Database 5, containing all questions and the relative answers, and the Multimedia Storage and Streaming Server 6, containing all the contributions to be possibly associated to each question, such as images and video and audio clips.

Both databases can be updated by game manager 2, through interfaces not shown in the drawing, by exploiting information provided by the subscribers or detected by the network. The contents of the quiz generator logical entity can also be updated by an operator.

For the dialogue with the users, game manager 2 is associated with an interface adaptation unit 7 that allows game manager 2 to present all information to the users in a form suitable to the user's terminal capabilities in terms of display, colours and audio and hence to the communications technique used for the dialogue.

For instance, the drawing shows three different presentation modalities utilisable in a 3rd generation system, namely SMS, WAP and WEB. Blocks 9 to 11 schematise the units that in network will be involved for managing each of said protocols.

Interface adaptation unit 7 may then build a presentation layer suitable to a particular terminal concerned. The technology used for separating the contents from the presentation is typically XML (Extensible Mark-up Language). Said term, as known, indicates the universal format for structured documents and data on the Web. Further information can be found at the site http://www.w3.org/XML.

In practice, game manager 2 and interface adaptation unit 7 co-operate to build on each terminal a so-called portal 8, i.e. a graphic user interface, allowing the user to access the service, and therefore to see detailed information about his/her profile and his/her game situation (ranking, challenges in abeyance...), to modify his/her preferences (quiz categories, difficulty...), to receive and enter data and messages necessary for playing the game, and so on.

Game manager 2 is connected also to the means that, in the mobile network, provide for the automatic user recognition and the billing of the communications, in particular by exploiting the information stored in the SIM card of the user terminal. Said means are schematised by RADIUS server 12 and billing server 13, that are both connected to Home Location Register (HLR) 14. As known, RADIUS server is an authentication and accounting server for terminal servers that speak the RADIUS protocol, which is an authentication protocol that has already become a de *facto* standard. Further information can be found at the Web site http://www.untruth.org/~josh/security/ radius/radius-auth.html. To allow a proper authentication and billing, both servers 12, 13 have also access to the profile and game database 4, where a link between the player's profile and the user data detectable by the network (the SIM data) is established.

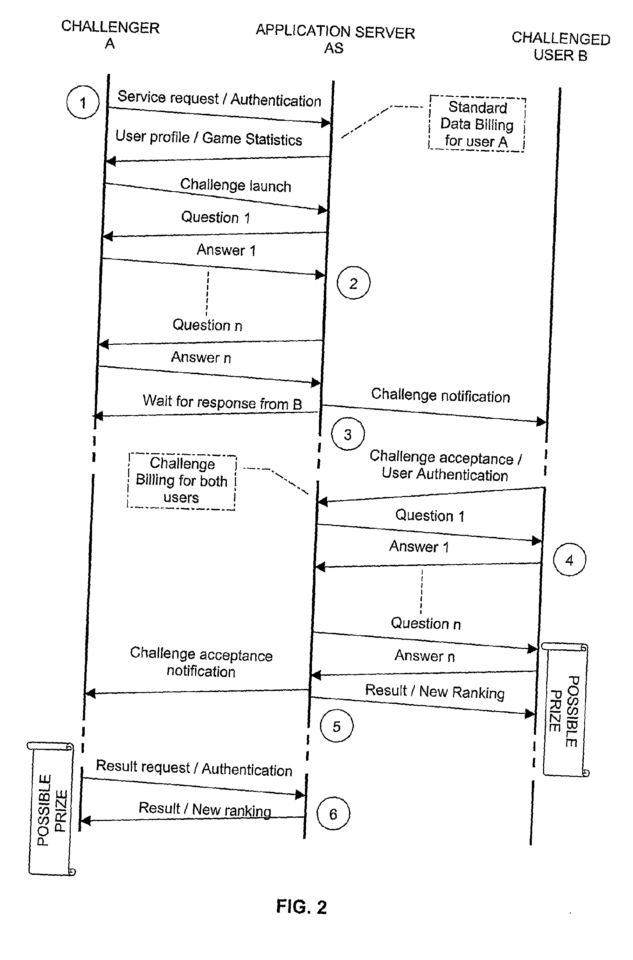

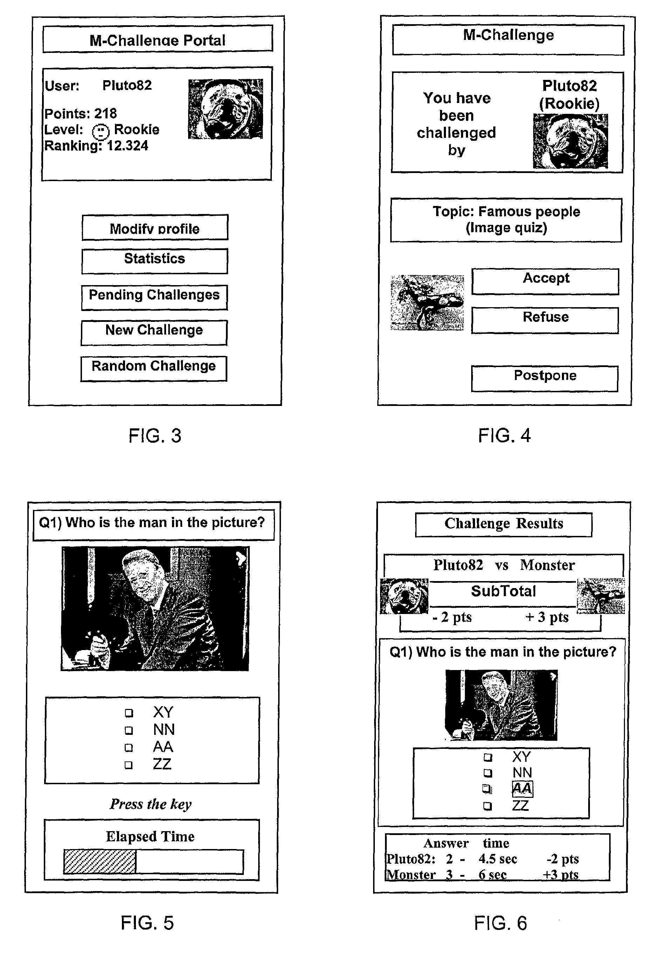

The dialogue between terminals 3 and server 1 performed in a quiz-based challenge will now be described with reference to the flow chart of Fig. 2 and to the images of Figs. 3 to 6.

The first time a user participates to the game, in case of either received or launched challenge, a subscription procedure is necessary. This will preferably be accomplished through the user terminal. To this end the user will be requested by game manager 2 of information allowing creation of the profile in the profile and game database 4. In particular, the user will have to communicate at least a nickname and the terminal capabilities (unless the latter can be automatically detected by the network). Optionally also the user's identity, the picture of the associated character (avatar) and the preferred topics will be communicated, as well as an indication about slogans, images or music pieces to be displayed or played in case of victory or defeat in a challenge. The profile is then incorporated into a subscriber's personal home page, which will be updated whenever a user participates to a challenge. In profile and game data base 4, the home pages are associated with the SIM data known to the network, and are taken by game manager 2 and presented on terminals 3 through interface adaptation unit 7 and the network.

When player A wishes to challenge another player B, he/she needs to access game manager 2 (possibly directly from the phone menu). As soon as player A has contacted manager 2 to this end, the latter automatically starts the authentication procedure, by contacting RADIUS Server 12. The authentication is based on the SIM recognition and the user does not need to insert any account name or password.

Once player A has been authenticated, portal 8 presents him/her his/her home page, which can look as shown in Fig. 3. The page contains the user's identity (in the form of the nickname and of the avatar, if any), the level of ability and information about the player's situation in the game, such as the total score and the ranking, as well as a number of keys or pushbuttons which are to be "pressed" in order the user can start the corresponding action. In the example shown, the keys allow the player to modify his/her profile, to see the game statistics, to see the outcome of pending challenges, and to launch new challenges.

For launching new challenge, the player has for instance two choices: he can select the opponent B (key "new challenge") or let the choice to the system (key "quick challenge") .

In the former case, the opponent can be chosen in different manners:
- by entering B's phone number (this is the only possibility in case B is not a subscriber), or
- by selecting B out of the list of users having subscribed to the service, made available in portal 8 with some information related to the profile and to the game statistics; or
- by directly entering the nickname of B, if B is a subscriber.

Note that, in order to guarantee the user privacy, the subscriber list does not contain private information such as the real complete name and the telephone number, but only the nicknames; of course, the players can start a chat (or message) session in case they want to get more in touch and eventually to exchange such personal data.

Besides choosing the opponent, the challenger is also to choose the topic of the quiz and the form in which the questions are presented. The questions may be:
- text based;
- image based (e.g. recognition of famous people, places, monuments, art masterpieces...);
- audio clip based (e.g. a piece of song with title/singer recognition, questions based on the song...);
- video clip based (e.g. few seconds of movie with questions about title/actor/director).

In case the challenger chooses a form or a topic incompatible with the profile of the challenged user (of course, if the latter is a subscriber), manager 2 will inform the challenger, which has to modify his/her choice or renounce to the challenge.

If player A has instead chosen the "quick challenge", the opponent will be chosen automatically and at random by the system, which will only effect a check about the actual compatibility of the questions with the profile of the possible opponent.

At this point, the challenge-launching phase (phase 1) is terminated and the challenger can exit from the game or launch a new challenge. The launching phase will generally be charged as a standard data connection, e.g. in the same manner as an Internet connection. The user will be similarly charged whenever he accesses the portal for checking and/or modifying the user profile or seeing the statistics.

Now, manager 2 can start presenting the questions to player A and can notify the challenge to the challenged user. The flow chart assumes that notification takes place after A has answered the questions, but of course notification can take place while A is answering the questions. Notifying the challenge after player A has terminated answering the questions has the advantage that the challenge outcome is immediately available as soon as player B has terminated.

The questions (phase 2) are taken by game manager 2 from question database 5 and are presented one by one on portal 8, through interface 7 and the network. If required and possible, the multimedia contributions to be associated with the questions are taken from multimedia storage and streaming server 6 and joined with the question. The questions are chosen at random out of the set related with the chosen topic, among questions that neither player has ever answered in previous challenges. Of course the choice must be compatible with the level of ability of both players (or at least of the challenger, if the challenged is not yet a subscriber). Together with the question, a number of answers are also presented and the player has to choose one of the alternatives. A time out will be set for answering each question.

In case of an image quiz (in the example, images of famous people), each question can look like in Fig. 5.

Once player A has completed the game, he/she is not immediately informed of the number of right/wrong answers, nor of the actual time taken to answer; instead he/she has to wait until also player B has completed his part. The window "elapsed time" merely serves to warn the player, but it does not contain any positive time information.

Challenge notification (phase 3) can be made by sending a suitable message, preferably an SMS message, from game manager 2 to the challenged user. SMS messages are compatible with terminals of any generation and therefore they can be used without problems also when the challenged player is not a subscriber and thus the system has no information about his/her terminal. Any other message form, e. g. MMS messages, e-mail or the like, can be used if the system and the terminals allow so.

If the challenged is a subscriber to the service, upon receiving the notification message he/she can access game manager 2 and receive, upon authentication, a notification page like that shown in fig. 4, informing him/her of the challenger and of the topic and form of the quizzes. If the challenged is not a subscriber, such information will be included in the notification message. The challenged player B can then decide:
a) to accept the challenge immediately, or
b) to postpone the decision regarding the eventual acceptance (a maximum postponement limit could be set), or
c) to refuse the challenge.

In case of refusal, the game manager sends a relevant notification to the challenger and the operations are terminated. While informing game manager 2 of the refusal, a non-subscribed user could also decide to communicate that he/she does not want to be contacted for challenges anymore.

In case of acceptance (either immediate or postponed), the challenged user, if he/she is not yet a subscriber, must subscribe to the service and a home page will be created for him/her as disclosed before. Then, after authentication, player B receives the same questions as player A (phase 4). At the acceptance by player B, both users will be charged for the game, e. g. with a fixed amount. In case of refusal of the challenge by the challenged user, the challenger will not be charged even if he has already answered the questions.

As soon as player B finishes, game manager 2 checks the correctness of the answers, compares the performance of the two players, shows the result of the challenge to B (phase 5) and notifies player A that the challenge is terminated. Since the challenger might have several challenges in progress, the notification will indicate also the challenged player. Note that the notification of the end of the challenge serves also as an implicit notification of the acceptance, that is why it has been denoted "Challenge acceptance notification".

It is now up to player A to access game manager 2, whenever he wants, and check the outcome (phase 6). This can be made through pushbutton "Pending challenges", see Fig. 3. Like for any other access to the service, authentication of the user is carried out. The check on the outcome of the challenge will be free of charge.

The ranking of both players is updated with the gained points and in case one (or both) of the users reaches a certain overall score, a prize can be awarded. The prize could be a bonus for new challenges or a phone credit of general use. Further prizes could be awarded to users who are temporarily in the best ranking position in different statistics (percentage of victories, percentage of right answers, number of invited people who accept the challenge and subscribe the service...), in absolute or in a given period of observation.

The display of the challenge outcome can look for instance as shown in Fig. 6. For each question, both users receive a page showing the question and the responses, with the correct response highlighted in some manner, and indicating how each participant has answered and how much time has elapsed between question and answer. The page also indicates the score allotted to each player for that answer, which score could be also negative if the answer was wrong (as is the case for the challenger in the example illustrated). Of course, the score could be different for different questions, e. g. based on the level of difficulty.

As it is apparent form the above description, the operation of the two users is wholly asynchronous and independent, so that no time criticality, and hence no demand for a particular quality of service exists. Thus, as soon the challenger has completed his/her part, he/she will be able to immediately start another challenge with another user, without need to wait for game completion by the other user. Moreover, no special equipment is required.

Of course, several pairs of users can be simultaneously and independently involved in respective challenges.

A one-to-one challenge has been disclosed above. Yet, also a one-to-n challenge could be envisaged, if the game allow so.

In this case the challenger, when launching the challenge, defines the n players to be challenged, in the same manner as for the single opponent discussed above, and moreover sets a challenge period (for example some days) within which the challenge is to be accepted. If nobody accepts, the challenger is notified of this by a message communicating that the challenge period is over. If the challenge is accepted, the game ends:
1) when the answers of the last answering player arrive at the server, if all challenged players accept the challenge and answer within the challenge period;
2) at the end of the challenge period (if at least one player has accepted the challenge).
At the end of the game, the result is made immediately available to the last player having completed the game. The challenger and the other challenged players will receive the notification of the end of the challenge, and may access the system to see the outcome as discussed above for the one-to-one challenge.

Of course, besides quizzes, the method and architecture described above can be applied to any other challenge-based game allowing the asynchronous and independent operation of the participants through their usual mobile terminals. In such case database 5 and multimedia server 6 will store data suitable for the different game scenarios to be presented to the users.

Examples of other games allowing an asynchronous operation of the participants could be time-based or point-based ability games.

In time-based ability games, the challenge is related to the time spent by the player in playing the game on his/her terminal. In this case a maximum duration for the game will be set, the allowed duration generally increasing in order of increasing difficult of the game. The time spent in playing the game is the term of comparison for the challenge.

The procedure for a time ability game is quite similar to that disclosed for the quiz-based game and could be as follows:
a) the challenger chooses the game and challenges one or more other players;
b) the challenger plays the game. The time spent in playing the game is measured in any suitable manner, for instance at the terminal, and is communicated to the server;
c) the challenged subscribers are notified about the challenge;
d) the subscribers that accept the challenge play the game independently of each other. The respective playing time is measured and communicated to the server;
e) the result is made available to the players with the same modalities discussed for the quizzes.

Of course, the time spent in playing could be measured at the server or by the network.

In point-based ability games, the challenge is related to a score accumulated by the player when playing a game on the terminal. The term of comparison for the challenge could be e. g. the points accumulated in a fixed time or the points gained in a game (with no time limitations, but with limited "lives", that is with a limited number of errors admitted). The procedure is quite similar to that of the time-based ability games, with the obvious difference that the terminal (or the server) computes a score instead of measuring a time.

The system will generally offer a choice among a number of games to the users. A same server 1 can make available to the users all games, in which case the server will generally include databases 5 and 6 specific for each game or for a set of similar games. In the alternative, a plurality of servers 1 could be provided, each governing a specific game or set of games.

Whatever the game, an attractive possibility offered by the system could be sponsoring the game by adding advertising clips before, during and after the game session, by inserting advertising message in the masks and so on. In that case, the sponsor could provide for paying at least a part of the game charge. The "sponsoring" could even be tailored to each user profile, as disclosed for instance in EP-A 1 179 952 mentioned above.

Hereinbefore, a system in which the game evolution is governed by a server has been disclosed. However, the game at a terminal could be governed by game software stored in the terminal itself. In that case, a central unit (or game master), accessible by all terminals through the network, could be still provided for comparing the performance of the players and determining the challenge outcome. Especially in case the possibility of a one-to-n challenge is envisaged, the central unit could be entrusted also with receiving the challenge-launch message form the challenger and notifying the challenge to all challenged users. However, the above tasks could even be entrusted to one of the terminals 3, acting as a game master. In a system of such kind, the subscribers could download the game software from the network. For instance, downloading of game software could take place the first time the player participates to that game. This could be of interest especially for challenged players that are not yet subscribers. Otherwise, the network could broadcast a list of available games and the subscribers could create and/or update their game portfolio. A game system in which the game is governed by a game software stored in the terminals, with or without the assistance of a central server, is known in se from the above mentioned EP-A 1 086 687.

It is clear that the above description is given only by way of non limiting example and that variant and modifications are possible without departing from the scope of the invention, as defined in the appended claims.

## Claims

1. A system for managing, in a mobile communications network, games based on a challenge between users of the network, in which each user of the network having subscribed a game service can challenge, through his/her mobile terminal (3), one or a plurality of other users of the network to one of a number of games made available by the service, the system comprising game governing means (1; 3) managing the evolution of the challenge for the users participating in a same challenge, comparing the performance of said users and determining the challenge outcome, the system being **characterised in that** said game governing means (2; 3) are arranged to present identical sets of game data on the terminals (3) of all users participating in a challenge and to enable each of said users to operate, by means of his/her terminal, on said data until completion of the game, in a manner independent of and asynchronous with respect to the operation by the other user(s) participating in the same challenge.

2. A system as claimed in claim 1, wherein said game governing means (2) are part of at least one game server (1) connected to the network (9, 10, 11, 12, 13, 14), said at least one game server (1) storing game data to be presented on the mobile terminals (3) of the users participating in a challenge and controlling the game evolution by exchanging data and messages with the terminals (3) of said users through the network (9, 10, 11, 12, 13, 14).

3. A system as claimed in claim 2, wherein said game governing means (2) in the or each server (1) are arranged to:
- supply the terminals (3) of all users participating in a challenge on said game with identical sets of downstream game data the users are to operate on by means of the respective terminal, and possibly with downstream messages related to the game, said downstream data and messages being supplied to the terminal (3) of a user independently of and asynchronously with respect to supplying the other user(s) participating in the same challenge with corresponding downstream data and messages; and
- receive from the terminal (3) of each user participating in said challenge, and process, upstream game data and upstream game-related messages generated by said user through said terminal (3) as a result of user actions and/or operations on the game data carried out independently of and asynchronously with respect to actions and operations carried out by the other user(s) participating in the same challenge.

4. A system as claimed in claim 2 or 3, wherein the or each game server (1) comprises first game-data memory means (5) for storing game data in a low-rank format, compatible with minimum technical capabilities required of any terminal (3) having access to the network, and second game-data memory means (6) for storing contributions to be attached to the first data portion, in case of data directed to terminals (3) having higher level capabilities.

5. A system as claimed in claim 4, wherein said second game-data memory means (6) are arranged to store contributions comprising of images, audio clips, video clips, and multimedia signal in general.

6. A system as claimed in any of claims 2 to 5, wherein the or each game server (1) includes subscriber-related memory means (4) for storing information about the network users having subscribed the game service, including information about the technical capabilities of the respective terminal (3) and communications protocols utilisable for said data and message exchange, as well as information specific for any challenge in progress in which the user is participating and overall statistical data relative to the participation to a game.

7. A system as claimed in any of claims 2 to 6, wherein the or each game server (1) further includes interface adaptation means (7), connected to said game governing means (2), for adapting the game data and the game-related messages to the characteristics of the terminal of each user and to a communication protocol used for said data and message exchange, whereby said interface adaptation means (7) separates the data and message contents from the respective presentation and builds a presentation layer suitable to each terminal.

8. A system as claimed in any of claims 2 to 7, wherein said game governing means (2) are arranged: to send the game data to the terminal (3) of a user launching the challenge immediately upon reception, from said terminal, of a challenge launch message, and immediately process the upstream data received from said terminal; and to send the game data to the terminal(s) (3) of the user(s) being challenged upon reception, from said terminal(s) of the challenged user(s), of a challenge acceptance message.

9. A system as claimed in any of claims 2 to 8, comprising a single game server (1) arranged to store game data and to control game evolution for all games made available by the service.

10. A system as claimed in any of claims 2 to 8, comprising a plurality of game servers (1), each arranged to store game data and to govern game evolution for one or a subset of the games made available by the service.

11. A system as claimed in claim 1, wherein said game governing means (3) are associated with the terminals (3) of all users having subscribed to the service and are arranged at least to present the game data to be operated on and to enable operation on said data.

12. A system as claimed in claim 11, wherein said game governing means (3) include means for enabling the terminal (3) of one of said users to compare the performance of said users and to determine the challenge outcome.

13. A system as claimed in claim 11, further including a centralised unit, accessible by the mobile terminals through the mobile communications network, for comparing the performance of the users participating in a challenge and determining the challenge outcome, and, possibly, for notifying the challenge to the challenged users.

14. A system as claimed in any preceding claim, wherein said game governing means (2, 3) are connected with means (12, 13) that, in the mobile communications network, provide for an automatic user recognition and a billing of the communications, in order to allow authentication of each user accessing the or a game server for participating to a game and billing of the participation.

15. A method of managing, in a mobile communications network, games based on a challenge between users of the network, the users playing the game by means of their mobile terminals (3) with the help of game governing means (1; 3) managing the evolution of the challenge at the mobile terminals (3) of all users participating in a same challenge, comparing the performance of said users and determining the challenge outcome, the method being **characterised in that** it comprise the steps of: presenting identical sets of game data on the terminals (3) of all users participating in a challenge; and enabling operation on said data, by means of the terminal (3) of each of said users participating in a challenge, until completion of the game, in a manner independent of and asynchronous with respect to the operation by the other user(s) participating in the same challenge.

16. A method as claimed claim 15, wherein the challenge can be launched to a user or to users selected either by the user launching the challenge or by the game governing means.

17. A method as claimed in claim 15 or 16, wherein said presenting and enabling steps are performed, for a given game, under the control of a server (1) connected to the network (9, 10, 11, 12, 13, 14), said server (1) storing game data from which said identical sets are chosen, and controlling said sending and enabling steps by means of a data and message exchange between said server (1) and the terminals (3) of the users concerned by a challenge, said dialogue comprising the steps of:
- sending identical sets of downstream game data from said server (1) to the terminals (3) of all users participating in a challenge for said presentation, said downstream game data as well as downstream game-related messages being sent to the terminal (3) of each user participating in said challenge independently of and asynchronously with respect to sending corresponding data and messages to the terminals (3) of other user(s) participating in said challenge;
- independently receiving and processing, at the server (1), upstream data and upstream game-related messages generated by the terminal (3) of each user participating in a challenge as a result of own actions and/or operations on the game data carried out independently of and asynchronously with respect to actions and operations carried out by the other user(s) participating in the same challenge.

18. A method as claimed in claim 17, wherein each item of said game data stored in the server (1) comprises a first data portion in a basic format, compatible with minimum technical capabilities required of any terminal (3) having access to the network, and a second data portion comprising contributions to be attached to the first data portion, in case of data directed to terminals (3) having higher level capabilities.

19. A method as claimed in claim 18, wherein said contributions comprise images, audio clips, video clips and multimedia signal in general.

20. A method as claimed in any of claims 17 to 19, further comprising the steps of: creating, in a subscription phase, a user profile for each user subscribing to the game service, by getting information about the technical capabilities of the user terminal (3) and about communication protocols utilisable for said data and message exchange; storing said profile in the server; and associating with said profile information specific for any challenge in progress in which the user is participating and overall statistic information concerning the user's participation to a game, thereby creating a personal home page to be presented on the user terminal (3) at any access to the server (1).

21. A method as claimed in claim 20, wherein said sending step includes adapting data and messages to the user profile, by separating the data and message contents from the respective presentation and building a presentation layer suitable to each terminal (3).

22. A method as claimed in any of claims 17 to 21, wherein said sending step includes sending the sets of downstream game data to the terminal (3) of a user launching a challenge upon reception at the server (1) of a challenge launch message from said terminal (3); sending a message to the terminal(s) (3) of the user(s) being challenged to inform such user(s) of the challenge; and sending the downstream game data to the terminal (3) of a user being challenged upon reception at the server (1) of a challenge acceptance message from said user.

23. A method as claimed in claim 22, wherein, in case of a challenged user that is not a subscriber to the service, said message informing of the challenge is sent in a low-rank format, supported by any terminal (3) having access to the network, and said acceptance message is processed as a request for subscription to the service.

24. A method as claimed in any of claims 17 to 23, wherein said sending and receiving and processing steps comprise sending the game data from the server (1) to the terminal (3) of a user launching the challenge immediately upon reception at the server, from said user, of the challenge launch message, and processing the upstream data sent from said user as soon as they are received.

25. A method as claimed in claim 24, wherein said sending step includes sending the downstream game data to the terminal(s) (3) of the user(s) being challenged and having accepted the challenge upon completion of the game by the user launching the challenge.

26. A method as claimed in any of claims 17 to 25, wherein said sending step further includes sending a message informing of the challenge result to the terminal (3) of the challenged user, or of the last challenged user completing the game, upon completion of the game by said user, and concurrently sending a message informing of the game completion to the terminals (3) of the other user(s) having participated in the challenge, whereby said other user(s) is (are) enabled to independently request the server (1) a notification of the challenge outcome.

27. A method as claimed in claim 15 or 16, wherein said presenting and enabling steps are individually performed, at each terminal (3), under the control of game governing means associated with the terminals (3) of all users having subscribed to the service.

28. A system as claimed in claim 27, wherein the comparison of the performance of the users participating in a challenge and the determination of the challenge outcome are performed by the game governing means associated with one of the terminals (3).

29. A system as claimed in claim 27, wherein the comparison of the performance of the users participating in a challenge and the determination of the challenge outcome are performed by a centralised unit, accessible by all terminals through the network, said centralised unit being possibly entrusted also with notifying the challenge to the challenged user(s).

30. A method as claimed in any of claims 27 to 29, further comprising the step of downloading through the network game software implementing said game governing means.

31. A method as claimed in any of claims 15 to 30, wherein sending and presentation of the downstream game to the terminal (3) of a user is performed upon authentication of the user as a subscriber to the service.

32. A method as claimed in any of claims 15 to 31, further comprising the step of billing the users for their participation to the challenge, after challenge acceptance by the user or at least one user being challenged.

33. A method as claimed in claim 32 or 33, wherein said authentication and billing are performed on the basis of the same information exploited by the network for user identification and billing of the communications, and by using the same network units providing for said identification and billing.
